Europäisches Patentamt

European Patent Office

Office européen des brevets

(11) Veröffentlichungsnummer: **0 190 434**
**A2**

## EUROPÄISCHE PATENTANMELDUNG

(21) Anmeldenummer: 85115549.9

(22) Anmeldetag: 06.12.85

(51) Int. Cl.⁴: **B01D 53/14**

(30) Priorität: 11.12.84 DE 3445063

(43) Veröffentlichungstag der Anmeldung:
13.08.86 Patentblatt 86/33

(84) Benannte Vertragsstaaten:
AT BE DE FR GB IT NL SE

(71) Anmelder: BASF Aktiengesellschaft
Carl-Bosch-Strasse 38
D-6700 Ludwigshafen(DE)

(72) Erfinder: Wagner, Eckhart, Dr.
Birkenstrasse 21a
D-6701 Maxdorf(DE)
Erfinder: Volkamer, Klaus, Dr.
Heidelberger Ring 21
D-6710 Frankenthal(DE)
Erfinder: Hefner, Werner, Dr.
In der teichgewann 20
D-6840 Lampertheim(DE)
Erfinder: Wagner, Ulrich, Dr.
Knospstrasse 7
D-6703 Limburgerhof(DE)
Erfinder: Schubert, Franz
Gartenstrasse 3
D-6149 Fuerth(DE)

(54) Verfahren zum Entfernen von Co2 und/oder H2S aus Gasen.

(57) Die vorliegende Erfindung betrifft ein Verfahren zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, wobei daß man das $CO_2$ und/oder $H_2S$ enthaltende Gas in einer ersten Absorptionsstufe bei Temperaturen von 40 bis 100°C mit einer 20 bis 70 Gew.% Methyldiethanolamin enthaltenden wäßrigen Absorptionsflüssigkeit behandelt, das am Kopf der ersten Absorptionsstufe erhaltene Gas einer zweiten Absorptionsstufe zuführt, in der es zur weiteren Entfernung von $CO_2$ und/oder $H_2S$ bei Temperaturen von 30 bis 90°C mit einer 20 bis 70 Gew.% Methyldiethanolamin enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit, am Kopf der zweiten Absorptionsstufe das behandelte Gas abzieht, die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt, die im unteren Teil der ersten Absorptionsstufe erhaltene, mit $CO_2$ und/oder $H_2S$ beladene wäßrige Absorptionsflüssigkeit zur Regenerierung in mindestens zwei Entspannungsstufen entspannt und dabei die letzte Entspannungsstufe bei vermindertem Druck gegenüber Atmosphärendruck betreibt, wobei der verminderte Druck in der letzten Entspannungsstufe mittels eines mechanischen Vakuumerzeugungsapparates und eines Wasserdampfstrahlers, die hintereinander geschaltet sind, erzeugt wird, einen am Sumpf der letzten Entspannungsstufe erhaltenen Strom der Absorptionsflüssigkeit in die erste Absorptionsstufe zurückführt, einen weiteren am Sumpf der letzten und/oder vorletzten Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

## Verfahren zum Entfernen von CO₂ und/oder H₂S aus Gasen

Die vorliegende Erfindung betrifft ein Verfahren zum Entfernen von $CO_2$ und/oder $H_2S$ aus Gasen mittels einer wäßrigen Methyldiethanolamin enthaltenden Absorptionsflüssigkeit.

Es ist bekannt, z.B. aus der deutschen Patenschrift 2551717, $CO_2$ und/oder $H_2S$ mittels wäßriger Lösungen von Alkanolaminen aus Gasen zu entfernen. Das bekannte Verfahren zeichnet sich zwar durch eine hohe Wirtschaftlichkeit aus, ist jedoch noch nicht in allen Fällen zufriedenstellend. Es wurde nun ein vorteilhaftes Verfahren gefunden zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, welches dadurch gekennzeichnet ist, daß man das $CO_2$ und/oder $H_2S$ enthaltende Gas in einer ersten Absorptionsstufe bei Temperaturen von 40 bis 100°C mit einer 20 bis 70 Gew.% Methyldiethanolamin enthaltenden wäßrigen Absorptionsflüssigkeit behandelt, das am Kopf der ersten Absorptionsstufe erhaltene Gas einer zweiten Absorptionsstufe zuführt, in der es zur weiteren Entfernung von $CO_2$ und/oder $H_2S$ bei Temperaturen von 30 bis 90°C mit einer 20 bis 70 Gew.% Methyldiethanolamin enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit, am Kopf der zweiten Absorptionsstufe das behandelte Gas abzieht, die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt, die im unteren Teil der ersten Absorptionsstufe erhaltene, mit $CO_2$ und/oder $H_2S$ beladene wäßrige Absorptionsflüssigkeit zur Regenerierung in mindestens zwei Entspannungsstufen entspannt und dabei die letzte Entspannungsstufe bei vermindertem Druck gegenüber Atmosphärendruck betreibt, wobei der verminderte Druck in der letzten Entspannungsstufe mittels eines mechanischen Vakuumerzeugungsapparates und eines Wasserdampfstrahlers, die hintereinandergeschaltet sind, erzeugt wird, einen am Sumpf der letzten Entspannungsstufe erhaltenen Strom der Absorptionsflüssigkeit in die erste Absorptionsstufe zurückführt, einen weiteren am Sumpf der letzten und/oder vorletzten Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

In einer vorteilhaften Ausführungsform des Verfahrens führt man zum Ausgleich der Wasserverluste durch in den am Kopf der zweiten Absorptionsstufe und bzw. oder aus den Entspannungsstufen und bzw. oder aus der Abstreifzone abgezogenen Gasströmen enthaltenes Wasser am Sumpf der vorletzten Entspannungsstufe eine dem Wasserverlust entsprechende Menge Wasserdampf zu.

In einer weiteren bevorzugten Ausführungsform des Verfahrens wird der Wasserdampfstrahler hinter den mechanischen Vakuumerzeugungsapparat geschaltet. Dabei kann es vorteilhaft sein, daß man das am Kopf der letzten Entspannungsstufe abgezogene Gas zusammen mit dem Wasserdampf, mit dem der Wasserdampfstrahler betrieben wird, am Sumpf der vorletzten Entspannungsstufe zuführt.

Durch die erfindungsgemäße Arbeitsweise wird eine regenerierte Absorptionsflüssigkeit mit einem geringeren $CO_2$- und/oder $H_2S$-Gehalt erhalten, so daß es möglich ist, geringere Mengen an Absorptionsflüssigkeit im Kreis zu führen. Hierdurch ergeben sich entsprechende Einsparungen bei den Energieverbräuchen für die Förderung der Absorptionsflüssigkeit. Gleichzeitig kann durch diese Arbeitsweise der apparative Aufwand vermindert werden, wodurch es auch zu einer Senkung der Investitionskosten kommt. Ein weitere Vorteil des Verfahrens besteht darin, daß der Wasserhaushalt der Gaswaschanlage in einfacher Weise geregelt werden kann. Neben der Regelung des Wasserhaushaltes der Gaswaschanlage kann durch diese Arbeitsweise gleichzeitig der Wärmehaushalt der Gaswaschanlage geregelt werden, so daß ein für die Regelung des Wärmehaushaltes in der Gaswaschanlage vorhandener Wärmetauscher kleiner ausgeführt werden oder gegebenenfalls ganz wegfallen kann.

Als nach dem erfindungsgemäßen Verfahren zu behandelnde Gase kommen beispielsweise Kohlevergasungsgase, Koksofengase, Erdgase und Synthesegase in Betracht.

Die Gase weisen im allgemeinen einen $CO_2$-Gehalt von 1 bis 90 Mol.%, vorzugsweise 2 bis 90 Mol.%, inbesondere 5 bis 60 Mol.% auf. Neben dem $CO_2$ können die Gase als weiteres Sauergas $H_2S$ enthalten oder sie können $H_2S$ allein enthalten, z.B. in Mengen von wenigen Mol.-ppm, beispielsweise 1 Mol.-ppm bis 50 Mol.%, vorzugsweise 10 Mol.-ppm bis 40 Mol.%.

Als Lösungsmittel wird für das erfindungsgemäße Verfahren eine 20 bis 70 Gew.%, vorzugsweise 30 bis 65 Gew.%, insbesondere 40 bis 60 Gew.% Methyldiethanolamin enthaltende wäßrige Absorptionsflüssigkeit verwendet. Zweckmäßig wird eine wäßrige Methyldiethanolaminlösung eingesetzt, z.B. eine wäßrige Lösung von Methyldiethanolamin technischer Reinheit. In einer vorteilhaften Ausführungsform des Verfahrens verwendet man eine wäßrige Methyldiethanolaminlösung, die zusätzlich 0,05 bis 1 Mol/l, insbesondere 0,1 bis 0,8 Mol/l, insbesondere 0,1 bis 0,6 Mol/l eines primären Amins oder Alkanolamins, wie Monoethanolamin, oder vorzugsweise eines sekundären Amins oder Alkanolamins, vorteilhaft Methylmonoethanolamin, ganz besonders vorteilhaft Piperazin, enthält.

Die 20 bis 70 Gew.-% Methyldiethanolamin enthaltende wäßrige Absorptionsflüssigkeit kann zusätzlich noch ein physikalisches Lösungsmittel enthalten. Geeignete physikalische Lösungsmittel sind beispielsweise N-Methylpyrrolidon, Tetramethylensulfon,, Methanol, Oligoethylenglykoldialkylether wie Oligoethylenglykolmethylisopropylether (SEPASOLV MPE), Oligoethylenglykoldimethylether (SELEXOL). Das physikalische Lösungsmittel ist in der Absorptionsflüssigkeit im allgemeinen in Mengen von 1 bis 60 Gew.-%, vorzugsweise 10 bis 50 Gew.-%, insbesondere 20 bis 40 Gew.-%, enthalten.

Das erfindungsgemäße Verfahren wird in der Weise durchgeführt, daß das $CO_2$ und/oder $H_2S$ enthaltende Gas zunächst in der ersten Absorptionsstufe mit der Methyldiethanolamin enthaltenden Absorptionsflüssigkeit behandelt wird. Dabei werden in der ersten Absorptionsstufe Temperaturen von 40 bis 100°C, vorzugsweise 50 bis 90°C, insbesondere 60 bis 90°C aufrechterhalten. Zweckmäßig wird das zu behandelnde Gas im unteren Teil der ersten Absorptionsstufe, vorzugsweise im unteren Drittel, zugeführt und im Gegenstrom zur Absorptionsflüssigkeit geführt, die zweckmäßig im oberen Teil der ersten Absorptionsstufe, vorzugsweise im oberen Drittel, zugegeben wird. Das am Kopf der ersten Absorptionsstufe erhaltene Gas wird einer zweiten Absorptionszone zugeführt, in der es zur weiteren Entfernung von $CO_2$ und/oder $H_2S$ bei Temperaturen von 30 bis 90°C, vorzugsweise 40 bis 80°C, insbesondere 50 bis 80°C mit der Methyldiethanolamin enthaltenden Absorptionsflüssigkeit behandelt wird, die einen geringeren Gehalt an $CO_2$ und/oder $H_2S$ aufweist als die der ersten Absorptionsstufe zugeführte Absorptionsflüssigkeit. Auch bezüglich der zweiten Absorptionsstufe wird das zu behandelnde Gas zweckmäßig im unteren Teil, vorzugsweise im unteren Drittel, der zweiten Absorptionszone zugeführt und im Gegenstrom zur Absorptionsflüssigkeit geführt, die zweckmäßig im oberen Teil, vorzugsweise im oberen Drittel, der zweiten Absorptionszone zugegeben wird. Das Produktgas wird am Kopf der zweiten Absorptionszone abgezogen. Die am Boden der zweiten Absorptionsstufe erhaltene mit $CO_2$ und/oder $H_2S$ vorbeladene wäßrige Absorptionsflüssigkeit wird am Kopf der ersten Absorptionsstufe zugeführt. In der ersten und zweiten Absorptionsstufe werden im allgemeinen Drücke von 5 bis 110 bar, vorzugsweise 10 bis 100 bar, insbesondere 20 bis 90 bar angewendet. Dabei können in der ersten und zweiten Stufe unterschiedliche Drüke verwendet werden. Im allgemeinen wird man jedoch in der ersten und zweiten Absorptionsstufe bei gleichem Druck bzw. bei im wesentlichen gleichem Druck arbeiten, wobei die Druckunterschiede z.B. durch sich in den Absorptionsstufen einstellenden Druckverlust bewirkt werden. Als Absorptionsstufen werden zweckmäßig Absorptionskolonnen verwendet, im allgemeinen Füllkörperkolonnen oder mit Böden ausgestattete Kolonnen. Die mit den Sauergasen $CO_2$ und/oder $H_2S$ beladene Absorptionsflüssigkeit wird im unteren Teil der ersten Absorptionszone, vorzugsweise im unteren Drittel, insbesondere am Sumpf der ersten Absorptionszone abgezogen.

Anschließend wird die aus der ersten Absorptionsstufe erhaltene beladene Absorptionsflüssigkeit zur Regenerierung in mindestens 2, zweckmäßig 2 bis 5, vorzugsweise 2 oder 3 Entspannungsstufen entspannt, wobei die letzte Entspannungsstufe bei vermindertem Druck gegenüber Atmosphärendruck betrieben wird und der verminderte Druck mittels eines mechanischen Vakuumerzeugungsapparates und eines Wasserdampfstrahlers, die hintereinandergeschaltet sind, erzeugt wird, und gegebenenfalls gleichzeitig zum Ausgleich der Wasserverluste des Systems durch in den am Kopf der zweiten Absorptionsstufe und der Entspannungsstufen sowie der Abstreifzone abgezogenen Gasströmen enthaltenes Wasse am Sumpf der vorletzten Entspannungsstufe eine dem Wasserverlust entsprechende Menge Wasserdampf zugeführt wird. Vorzugsweise wird dabei in der letzten Entspannungsstufe ein Druck von 0,3 bis etwa 1 bar, vorzugsweise 0,4 bis etwa 1 bar, insbesondere 0,6 bis etwa 0,9 bar aufrechterhalten. Als mechanische Vakuumerzeugungsapparate kommen beispielsweise Vakuumpumpen und vorzugsweise Verdichter, z.B. Schraubenverdichter, Zentrifugalverdichter in Betracht. Vorzugsweise ist der Wasserdampfstrahler hinter den mechanischen Vakuumerzeugungsapparat geschaltet. Im allgemeinen werden in den Entspannungsstufen Temperaturen von 33 bis 100°C, vorzugsweise 45 bis 90°C, insbesondere 55 bis 85°C angewendet.

Zum Ausgleich der Wasserverluste, die bei dem Verfahren durch in den am Kopf der zweiten Absorptionsstufe und der Entspannungsstufen sowie der Abstreifzone abgezogenen Gasströmen enthaltenes Wasser entstehen, wird zweckmäßig am Sumpf der vorletzten Entspannungsstufe eine dem Wasserverlust entsprechende Menge Wasserdampf zugeführt. In der Regel wird das in den abgezogenen Gasströmen enthaltene Wasser im wesentlichen als Wasserdampf abgezogen. Dem Sumpf der vorletzten Entspannungsstufe kann Niederdruck-, Mitteldruck- oder Hochdruckdampf, d.h. z.B. 1,5- bis 100-bar Dampf zugeführt werden. Vorzugsweise verwendet man Dampf im niederen Druckbereich, z.B. 1,5- bis 10-bar-Dampf, vorteilhaft 1,5- bis 5-bar-Dampf, da dieser Niederdruckdampf im allgemeinen wohlfeil zur Verfügung steht.

Das am Kopf der letzten Entspannungsstufe abgezogene Gas kann an die Atmosphäre abgegeben werden oder mit dem aus der vorletzten Entspannungsstufe abgezogenen Gasstrom vermischt und einer weiteren Behandlung zugeführt werden. In einer vorteilhaften Ausführungsform wird das Verfahren in der Weise betrieben, daß der Wasserdampfstrahler hinter den mechanischen Vakuumerzeugungsapparat geschaltet ist, und dabei zweckmäßig das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt wird.

Falls der Wasserdampf aus dem Wasserdampfstrahler am Sumpf der vorletzten Entspannungsstufe zugeführt wird, wird der Wasserdampfstrahler zweckmäßig mit einer solchen Menge Wasserdampf betrieben, wie sie zum Ausgleich der Wasserverluste des Verfahrens erforderlich ist. Es ist jedoch auch möglich, den Wasserdampfstrahler mit einer geringeren als zum Ausgleich der Wasserverluste entsprechenden Wasserdampfmenge zu betreiben und am Sumpf der vorletzten Entspannungsstufe zusätzlich die zum Ausgleich der Wasserverluste noch fehlende Wasserdampfmenge zuzuführen. Zum Betrieb des Wasserdampfstrahlers kann Mitteldruck- oder Hochdruckdampf verwendet werden. Vorzugsweise verwendet man Dampf im mittleren Druckbereich, z.B. 5- bis 20-bar-Dampf, vorzugsweise 5- bis 10-bar-Dampf.

Die vorletzte Entspannungsstufe wird zweckmäßig bei einem Druck von etwa 1 bis 30 bar, vorzugsweise etwa 1 bis 25 bar, insbesondere etwa 1 bis 20 bar betrieben.

Für die Entspannung werden zweckmäßig Entspannungsbehälter, die z.B. auch als Kolonnen gestaltet sein können, verwendet. Diese Entspannungsbehälter können frei von besonderen Einbauten sein. Es können jedoch auch mit Einbauten, z.B. mit Füllkörpern, ausgestattete Kolonnen verwendet werden.

Am Kopf der letzten Entspannungsstufe wird ein im wesentlichen die Sauergase $CO_2$ und/oder $H_2S$ enthaltender Gasstrom erhalten, der zweckmäßig entweder mit dem am Kopf der vorletzten Entspannungsstufe abgezogenen Gas vereinigt wird oder vorzugsweise zusammen mit dem Wasserdampf für den Betrieb des Wasserdampfstrahlers am Sumpf der vorletzten Entspannungsstufe zugeführt wird.

Ein Strom der am Sumpf der letzten Entspannungsstufe erhaltenen Absorptionsflüssigkeit, die in den Entspannungsstufen bereits zu einem großen Teil, zweckmäßig zu mehr als 50 %, vorzugsweise zu mehr als 60 %, von den Sauergasen $CO_2$ und/oder $H_2S$ befreit worden ist, wird anschließend als Waschflüssigkeit in die erste Absorptionsstufe zurückgeführt und dort zweckmäßig am Kopf der Absorptionsstufe zugegeben. Ein weiterer am Sumpf der letzten und/oder vorletzten Entspannungsstufe erhaltener Strom der Absorptionsflüssigkeit wird zur weiteren Regenerierung einer Abstreifzone zugeführt, in der die noch in diesem Strom enthaltenen Sauergase $CO_2$ und/oder $H_2S$ weitgehend ausgestreift werden. In einer bevorzugten Ausführungsform der vorstehend beschriebenen Arbeitsweise wird die am Sumpf der letzten Entspannungsstufe erhaltene Absorptionsflüssigkeit vollständig in die erste Absorptionsstufe zurückgeführt, und es wird ein Teilstrom der am Sumpf der vorletzten Entspannungsstufe erhaltenen Absorptionsflüssigkeit zur weiteren Regenerierung der Abstreifzone zugeführt. In einer weiteren bevorzugten Ausführungsform wird die am Sumpf der letzten Entspannungsstufe erhaltene Absorptionsflüssigkeit teilweise als Waschflüssigkeit in die erste Absorptionsstufe zurückgeführt, und es wird ein weiterer Teilstrom der am Sumpf der letzten Entspannungsstufe erhaltenen Absorptionsflüssigkeit zur weiteren Regenerierung der Abstreifzone zugeführt. Es ist jedoch auch möglich, einen Teilstrom der am Sumpf der letzten Entspannungsstufe erhaltenen Absorptionsflüssigkeit als Waschflüssigkeit in die erste Absorptionsstufe zurückzuführen und einen weiteren Teilstrom der am Sumpf der letzten Entspannungsstufe erhaltenen Absorptionsflüssigkeit und einen Teilstrom der am Sumpf der vorletzten Entspannungsstufe erhaltenen Absorptionsflüssigkeit zur weiteren Regenerierung der Abstreifzone zuzuführen. Der zur ersten Absorptionsstufe zurückgeführte Strom und der der Abstreifzone zugeführte Strom verhalten sich im allgemeinen mengenmäßig zueinander wie 10 : 1 bis 1 : 2, vorzugsweise 5 : 1 bis 1 : 1. Der am Kopf der Abstreifzone erhaltene, im wesentlichen $CO_2$ und/oder $H_2S$ neben Wasserdampf enthaltende Gasstrom kann aus dem System abgezogen werden. Es kann jedoch auch vorteilhaft sein, diesen $CO_2$ und/oder $H_2S$ neben Wasserdampf enthaltenden Gasstrom zur Verringerung der Wasserverluste des Systems in den unteren Teil, vorzugsweise in die untere Hälfte, insbesondere in das untere Drittel der vorletzten Entspannungsstufe zurückzuführen. Als Abstreifzone wird zweckmäßig eine Abstreifkolonne verwendet, im allgemeinen eine Füllkörperkolonne oder eine mit Böden ausgestattete Kolonne. Im allgemeinen wird die Abstreifkolonne bei Temperaturen von 85 bis 115°C, vorzugsweise 85 bis 110°C, insbesondere 90 bis 110°C betrieben.

Die am Sumpf der Abstreifzone erhaltene regenerierte Absorptionsflüssigkeit wird in die zweite Absorptionsstufe zurückgeführt und dort zweckmäßig am Kopf dieser Absorptionsstufe zugegeben.

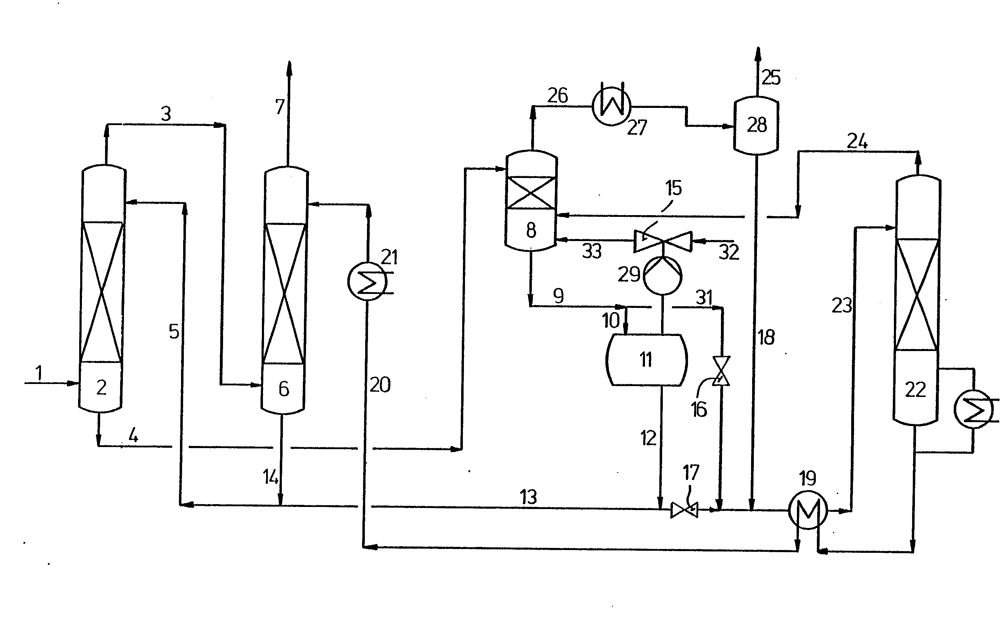

Nachfolgend werden weitere Einzelheiten der Erfindung anhand von einem Ausführungsbeispiel, dessen Verfahrensablauf in der Figur schematisch dargestellt ist, erläutert.

Gemäß der Figur wird ein $CO_2$ und/oder $H_2S$ enthaltendes Gas, z.B. ein $CO_2$ als Sauergas enthaltendes Synthesegas, über Leitung 1 unter Druck in den Sumpf der ersten Absorptionskolonne 2 gegeben. Gleichzeitig wird über Leitung 5 als Absorptionsflüssigkeit 20 bis 70 gew.%ige wäßrige Methyldiethanolaminlösung auf den Kopf der ersten Absorptionskolonne gegeben. Das am Kopf der ersten Absorptionskolonne erhaltene vorgewaschene Gas wird zur Feinreinigung über Leitung 3 in den Sumpf der zweiten Absorptionskolonne 6 gegeben. Gleichzeitig wird über Leitung 20 als Absorptionsflüssigkeit 20 bis 70 gew.%ige wäßrige Methyldiethanolaminlösung, die aus der Abstreifkolonne 22 erhalten wird und praktisch frei von Sauergasen ist, auf den Kopf der zweiten Absorptionskolonne gegeben. Das gewaschene Gas wird über Leitung 7 am Kopf der zweiten Absorptionskolonne 6 abgezogen. Die am Sumpf der zweiten Absorptionskolonne erhaltene mit den Sauergasen vorbeladene wäßrige Absorptionsflüssigkeit wird über Leitungen 14 und 5 nach Vereinigung mit der über Leitungen 12 und 13 aus der letzten Entspannungsstufe 11 erhaltenen Absorptionsflüssigkeit auf den Kopf der ersten Absorptionskolonne 2 gegeben. Die am Sumpf der ersten Absorptionskolonne 2 erhaltene, mit $CO_2$ und/oder $H_2S$ beladene wäßrige Absorptionsflüssigkeit wird zur Regenerierung über Leitung 4 in einem ersten Entspannungsverdampfungsbehälter 8 entspannt, z.B. über ein Ventil oder vorzugsweise über eine Entspannungsturbine. Hierbei wird ein Zwischenentspannungsgas aus der Absorptionsflüssigkeit freigesetzt, das über Leitung 26 abgezogen wird. Nach Passieren des Wärmetauschers 27 und des Abscheidegefäßes 28 werden die vereinigten Gasströme über Leitung 25 abgezogen. Im Abscheidegefäß 28 abgeschiedene Flüssigkeit wird über Leitung 18 abgezogen. Am Boden des Entspannungsbehälters 8 wird die teilentspannte Absorptionsflüssigkeit über Leitung 9 abgezogen und in einer ersten Variante des Verfahrens bei geschlossenem Ventil 16 und geöffnetem Ventil 17 ganz über Leitung 10 in einen zweiten Entspannungsbehälter 11 entspannt, in dem mittels des mechanischen Vakuumerzeugungsapparates 29, z.B. eines Verdichters, und des Wasserdampfstrahlers 15 ein Druck von z.B. 0,5 bar bis weniger als Atmosphärendruck aufrechterhalten wird. Dabei wird dem Wasserdampfstrahler 15 über Leitung 32 zweckmäßig eine solche Menge Wasserdampf zugeführt, wie sie zum Ausgleich der Wasserverluste des Systems erforderlich ist. Das am Kopf des Entspannungsbehälters 11 abgezogene Gas wird zusammen mit dem Wasserdampf, mit dem der Wasserdampfstrahler 15 betrieben wird, über Leitung 33 am Sumpf des ersten Entspannungsbehälters 8 zugeführt. Die am Sumpf des Entspannungsbehälters 11 über Leitung 12 abgezogene entspannte Absorptionsflüssigkeit wird teilweise über Leitungen 13 und 5 zum Kopf der Absorptionskolonne 2 zurückgeführt und zum anderen Teil über Leitung 23 auf den Kopf der Abstreifkolonne 22 gegeben.

In einer zweiten Variante des Verfahrens wird bei geschlossenem Ventil 17 und geöffnetem Ventil 16 die über Leitung 9 abgezogene teilentspannte Absorptionsflüssigkeit zu einem Teil über Leitung 10 in den zweiten Entspannungsbehälter 11 entspannt und zum anderen Teil über Leitungen 31 und 23 auf den Kopf der Abstreifkolonne 22 gegeben. Die am Sumpf des Entspannungsbehälters 11 über Leitung 12 abgezogene entspannte Absorptionsflüssigkeit wird bei der zweiten Variante ganz über Leitungen 13 und 5 zum Kopf der Absorptionskolonne 2 zurückgeführt.

Die am Sumpf der Abstreifkolonne 22 erhaltene regenerierte Absorptionsflüssigkeit wird über Leitung 20 nach passieren der Wärmetauscher 19 und 21 auf den Kopf der zweiten Absorptionskolonne 6 zurückgeführt. Der am Kopf der Abstreifkolonne 22 erhaltene $CO_2$ und/oder $H_2S$ enthaltende Abgasstrom wird über Leitung 24 zweckmäßig dem unteren Teil des Entspannungsbehälters 8 zugeführt. Es ist jedoch auch möglich, den am Kopf der Abstreifkolonne 22 erhaltenen Abgasstrom unmittelbar aus dem System abzuziehen, ohne ihn noch vorher dem Entspannungsbehälter 8 zuzuführen.

Das folgende Beispiel veranschaulicht die Erfindung.

Beispiel

Man verwendet eine Gaswaschanlage entsprechend der Figur mit zwei hintereinandergeschalteten Absorptionskolonnen, zwei hintereinandergeschalteten Entspannungsbehältern und einer Abstreifkolonne. in den Absorptionskolonnen werden 9800 kmol/h eines $CO_2$- haltigen Synthesegases mit einer 50 gew.%igen wäßrigen Methyldiethanolamin-Lösung als Absorptionsflüssigkeit gewaschen. Das zu reinigende Sysnthesegas wird mit einem Druck von 28 bar am Sumpf der ersten Absorptionskolonne zugeführt. Das zu reinigende, aus einem Steam Reformer stammende Gas die folgende Zusammensetzung:

|  |  |
|---|---|
| $CO_2$ | 18,3 Vol.% |
| CO | 0,4 Vol.% |
| $H_2$ | 61,0 Vol.% |
| $N_2$ | 20,0 Vol.% |
| $CH_4$ | 0,1 Vol.% |
| Ar | 0,2 Vol.% |

Die Temperatur der Absorptionsflüssigkeit im Zulauf zur ersten Absorptionskolonne beträgt 60°C. Die Temperatur der der zweiten Absorptionskolonne zugeführten Absorptionsflüssigkeit beträgt 75°C. Das am Kopf der zweiten Absorptionskolonne abgezogene gereinigte Synthesegas hat die folgende Zusammensetzung:

|  |  |
|---|---|
| $CO_2$ | 0,01 Vol.% |
| CO | 0,5 Vol.% |
| $H_2$ | 74,6 Vol.% |
| $N_2$ | 24,5 Vol.% |
| $CH_2$ | 0,2 Vol.% |
| Ar | 0,3 Vol.% |

Die die erste Absorptionskolonne am Sumpf verlassende beladene Absorptionsflüssigkeit wird im ersten Entspannungsbehälter auf einen Druck von 5 bar entspannt. Am Kopf des ersten Entspannungsbehälters werden 1150 kmol/h eines Entspannungsgases abgezogen. Die am Boden des zweiten Entspannungsbehälters abgezogene Absorptionsflüssigkeit wird anschließend in den zweiten Entspannungsbehälter entspannt, in dem mittels eines Wasserdampfstrahlers und eines Verdichters ein Druck von 0,7 bar aufrechterhalten wird. Die am Boden des zweiten Entspannungsbehälters erhaltene entspannte Absorptionsflüssigkeit wird zu etwa 3/4 in die erste Absorptionskolonne zurückgeführt. Der restliche Teil wird in der Abstreifkolonne regeneriert und danach in die zweite Absorptionskolonne zurückgeführt.

Nach dem neuen Verfahren können Absorptionskolonnen mit deutlich geringerem Durchmesser und geringeren Bodenzahlen verwendet werden, wodurch eine erhebliche Reduktion der Investitionskosten für die Gaswaschanlage erzielt werden kann.

**Ansprüche**

1. Verfahren zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, dadurch gekennzeichnet, daß man das $CO_2$ und/oder $H_2S$ enthaltende Gas in einer ersten Absorptionsstufe bei Temperaturen von 40 bis 100°C mit einer 20 bis 70 Gew.% Methyldiethanolamin enthaltenden wäßrigen Absorptionsflüssigkeit behandelt, das am Kopf der ersten Absorptionsstufe erhaltene Gas einer zweiten Absorptionsstufe zuführt, in der es zur weiteren Entfernung von $CO_2$ und/oder $H_2S$ bei Temperaturen von 30 bis 90°C mit einer 20 bis 70 Gew.% Methyldiethanolamin enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit, am Kopf der zweiten Absorptionsstufe das behandelte Gas abzieht, die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt, die im unteren Teil der ersten Absorptionsstufe erhaltene, mit $CO_2$ und/oder $H_2S$ beladene wäßrige Absorptionsflüssigkeit zur Regenerierung in mindestens zwei Entspannungsstufen entspannt und dabei die letzte Entspannungsstufe bei vermindertem Druck gegenüber Atmosphärendruck betreibt, wobei der verminderte Druck in der letzten Entspannungsstufe mittels eines mechanischen Vakuumerzeugungsapparates und eines Wasserdampfstrahlers, die hintereinander geschaltet sind, erzeugt wird, einen am Sumpf der letzten Entspannungsstufe erhaltenen Strom der Absorptionsflüssigkeit in die erste Absorptionsstufe zurückführt, einen weiteren am Sumpf der letzten und/oder vorletzten Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

2. Verfahren nach Anspruch 1, dadurch gekennzeichnet, daß zum Ausgleich der Wasserverluste durch in den am Kopf der zweiten Absorptionsstufe und/oder aus den Entspannungsstufen und/oder aus der Abstreifzone abgezogenen Gasströmen enthaltenes Wasser am Sumpf der vorletzten Entspannungsstufe eine dem Wasserverlust entsprechende Menge Wasserdampf zuführt.

3. Verfahren nach Anspruch 1 und 2, dadurch gekennzeichnet, daß der Wasserdampfstrahler hinter den mechanischen Vakuumerzeugungsapparat geschaltet ist.

4. Verfahren nach Anspruch 3, dadurch gekennzeichnet, daß am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt wird.

0 190 434

O.Z. 0050/37490